Europäisches Patentamt

European Patent Office

Office européen des brevets

(19)

(11) Veröffentlichungsnummer : **0 180 870**
**B1**

(12)

# EUROPÄISCHE PATENTSCHRIFT

(45) Veröffentlichungstag der Patentschrift :
07.03.90

(21) Anmeldenummer : 85113607.7

(22) Anmeldetag : 25.10.85

(51) Int. Cl.⁵ : **B 01 D 37/02, C 09 B 67/54//**
**B01F17/42, C09B41/00**

(54) Verfahren zur Herstellung hochkonzentrierter wässriger Presskuchen von Feststoffen.

(30) Priorität : 06.11.84 DE 3440488

(43) Veröffentlichungstag der Anmeldung :
14.05.86 Patentblatt 86/20

(45) Bekanntmachung des Hinweises auf die Patenterteilung : 07.03.90 Patentblatt 90/10

(84) Benannte Vertragsstaaten :
BE CH DE FR GB IT LI

(56) Entgegenhaltungen :
EP--A-- 0 074 670
FR--A-- 1 265 491
FR--A-- 2 235 728
FR--A-- 2 269 991
NL--C-- 88 137
CHEMICAL ABSTRACTS, Band 94, Nr. 4, Januar 1981,
Seite 69, Zusammenfassung Nr. 17058p, Columbus,
Ohio, US; & JP - A - 80 104 358
CHEMICAL ABSTRACTS, Band 93, Nr. 18, November
1980, Seite 75, Zusammenfassung Nr. 169620h,
Columbus, Ohio, US; & JP - A - 80 99 336

(73) Patentinhaber : HOECHST AKTIENGESELLSCHAFT
Postfach 80 03 20
D-6230 Frankfurt am Main 80 (DE)

(72) Erfinder : Weide, Joachim
Im Stückes 63
D-6233 Kelkheim (Taunus) (DE)
Erfinder : Dietz, Erwin, Dr.
St.-Matthäus-Strasse 7
D-6233 Kelkheim (Taunus) (DE)
Erfinder : Deubel, Reinhold, Dr.
Geierfeld 64
D-6232 Bad Soden am Taunus (DE)

EP 0 180 870 B1

## Beschreibung

Die Erfindung betrifft ein Verfahren zur Herstellung hochkonzentrierter wäßriger Preßkucken von in Wasser unlöslichen bis schwer löslichen Feststoffen, insbesondere von in Wasser schwer löslichen oder unlöslichen Farbstoffen und Pigmenten.

Viele Farbmittel, beispielsweise die besonders wichtigen Azofarbstoffe oder Azopigmente, werden in wäßrigem Medium hergestellt und aus dem Reaktionsgemisch durch Filtrieren oder Abpressen isoliert und gegebenenfalls durch Auswaschen von Nebenprodukten gereinigt. Man erhält Preßkuchen mit Feststoffgehalten von ca. 10 bis 30 %, die anschließend getrocknet oder als solche weiterverarbeitet werden. Da die Trocknung von wäßrigen Preßkuchen sehr energieaufwendig ist, ist man bemüht, möglichst hoch konzentrierte Preßkuchen herzustellen. Dies kann z. B. durch den Einsatz von Membran-Hochdruck-Filterpressen oder Sieb-Nauta-Mischern unter erheblichem mechanischem Aufwand erfolgen.

Sollen die Feststoffe wie häufig bei Farbstoffen oder Pigmenten zu wäßrigen Teigen weiter verarbeitet werden, so ist auch hier meistens eine Trocknung erforderlich, da der niedrige Feststoffgehalt der Preßkuchen eine praxisgerechte Farbmittelkonzentration in den Teigen nicht zuläßt.

Sowohl die erforderliche Trocknung als auch der zur Dispergierung von Pulvern benötigte höhere Dispergieraufwand, verursachen jedoch erhebliche Kosten. Der Wunsch nach einer einfachen Methode zur Herstellung hochkonzentrierter wäßriger Preßkuchen wird aus den genannten Erfordernissen deutlich und durch die vorliegende Erfindung erfüllt.

Die Erfindung besteht in einem Verfahren zur Herstellung eines hochkonzentrierten wäßrigen Preßkuchens eines in Wasser unlöslichen bis schwerlöslichen organischen Feststoffes aus der Gruppe der Farbstoffe, Pigmente oder Pflanzenschutzmittel, dadurch gekennzeichnet, daß man eine wäßrige Suspension des jeweiligen Feststoffes mit einem Gehalt an 0,5 bis 15 mg pro Quadratmeter Feststoffoberfläche eines oder mehrerer nichtionischer Tenside aus der Gruppe der Oxalkylate von aliphatischen, cycloaliphatischen, aromatischen oder heterocyclischen Hydroxy- und Aminoverbindungen sowie der Blockpolymerisate von Ethylenoxid und Propylenoxid, wobei die Tenside in wäßriger Lösung einen Trübungspunkt haben, herstellt und den Feststoff bei einer Temperatur oberhalb des Trübungspunktes des bzw. der eingesetzten Tenside isoliert.

Die Feststoffgehalte der anfallenden Preßkuchen sind vom Tensid, von der Tensidmenge, vom Feststoff und dabei besonders von der Oberfläche des Feststoffs abhängig. Ein geeignetes nichtionogenes Tensid oder Tensidgemisch muß in wäßriger Lösung einen Trübungspunkt zeigen und bei Temperaturen oberhalb des Trübungspunktes weitgehend seine Hydrophilität verlieren, so daß sich in Wasser durch Phasentrennung zwei Schichten bilden. Der Trübungspunkt des oder der Tenside liegt in Wasser bevorzugt zwischen 5 und 90 °C, insbesondere zwischen 20 und 70 °C. Die Temperaturangaben gelten für eine Arbeitsweise unter Normaldruck. Die erforderliche Tensidmenge ist von der Größe der Oberfläche des jeweiligen Feststoffs abhängig. Die Menge liegt vorzugsweise zwischen 0,5 und 15 mg, insbesondere bevorzugt zwischen 1 und 6 mg pro Quadratmeter Oberfläche des Feststoffs. In der Regel wird mit steigender Tensidmenge ein Maximum des Feststoffgehalts der Preßkuchen durchschritten.

Zu Beginn des Verfahrens muß eine gleichmäßige Durchmischung des Tensids mit dem Feststoff in wäßriger Suspension erreicht werden. Dies kann in der Weise erfolgen, daß das Tensid einer wäßrigen Feststoffsuspension zugesetzt und gut verrührt wird. In anderen Fällen ist es möglich, den Feststoff in Gegenwart des Tensids aus einer wäßrigen Lösung auszufällen, wobei eine schnellere Durchmischung erreicht wird. Beide Verfahrensweisen können bei einer Temperatur oberhalb und unterhalb des Trübungspunktes durchgeführt werden. Vorzugsweise wird das Tensid jedoch bei einer Temperatur unterhalb des Trübungspunktes mit dem Feststoff vermischt. Unter Rühren erhitzt man die tensidhaltige wäßrige Feststoffsuspension anschließend auf eine Temperatur oberhalb des Trübungspunktes. Ein längeres Nachrühren bei der erhöhten Temperatur ist im allgemeinen nicht erforderlich. Der Feststoff wird schließlich bei einer Temperatur oberhalb des Trübungspunktes mit üblichen Hilfsmitteln, z. B. durch Absaugen oder durch Abpressen an Filtern, isoliert.

Die Tenside können mit jeder wäßrigen Feststoffsuspension eines organischen Feststoffs vermischt werden. Bevorzugt findet das Verfahren Anwendung bei organischen Feststoffen, die in wäßrigem Medium synthetisiert werden. Beispielhaft seien als Substrate schwer wasserlösliche Farbstoffe, Pflanzenschutzmittel und besonders Pigmente und Dispersionsfarbstoffe erwähnt.

Bei der Herstellung von Azofarbstoffen und Azopigmenten ist ein Zusatz des Tensids zur Kupplungsuspension nach der Synthese vorteilhaft. Läßt sich ein Feststoff aus einer wäßrigen Lösung ausfällen, beispielsweise wie viele Farbstoffe mit sauren Gruppen durch Änderung des pH-Wertes, ist die Zugabe des Tensids zur Farbstofflösung vor der Ausfällung vorteilhaft.

Ein weiterer Vorzug des Verfahrens ist die Möglichkeit, nach der Isolierung des Feststoffes aus dem heißen Reaktionsgemisch bei einer Temperatur oberhalb des Trübungspunktes der tensidhaltigen Feststoffsuspension lösliche Nebenprodukte, z. B. Salze, mit Hilfe von Wasser auswaschen zu können, ohne den Tensidgehalt wesentlich zu beeinflussen.

Nach dem Abkühlen der hochkonzentrierten Preßkuchen auf eine Temperatur unterhalb des Trübungspunktes werden die Dispergiereigenschaften der Tenside wieder voll wirksam.

Durch Einwirkung von geringen Scherkräften, z. B. beim Rühren, tritt in vielen Fällen wieder eine Verflüssigung zu gieß- und pumpfähigen Teigen mit hohen Feststoffgehalten ein. Solche Teige mit einem sehr hohen Feststoffgehalt lassen sich kostengünstig zu Pulvern sprühtrocknen. Die Verflüssigung der Preßkuchen durch Abkühlen und das Festwerden der Preßkuchen durch Erhitzen ist reversibel.

Für das Verfahren ist eine Vielzahl nichtionogener Tenside mit unterschiedlichen Strukturen geeignet, sofern sie die Bedingung erfüllen, einen Trübungspunkt in Wasser aufzuweisen. Als besonders geeignet haben sich nichtionogene Oxalkylate von Alkoholen, Fettalkoholen, Phenolen, Alkylphenolen, Naphtholen, Alkylnaphtholen und Fettaminen mit Ethylenoxid und/oder Propylenoxid sowie Blockpolymere von Ethylenoxid und Propylenoxid erwiesen. Die Temperatur des Trübungspunktes derartiger Verbindungen hängt von der Länge der Polyalkylenoxy-Kette ab und kann bei der Synthese der Tenside durch Wahl der Menge eingesetzten Ethylenoxids und/oder Propylenoxids variiert werden.

Geeignete nichtionogene Tenside sind Verbindungen mit einer Poly(ethylenoxy)-Kette oder einer Poly(ethylenoxy)-poly(methylethylenoxy)-Kette, die über ein Sauerstoff- oder ein Stickstoffatom mit Resten der folgenden Art verbunden sind : aliphatische oder cycloaliphatische Alkylreste, primäre oder sekundäre Alkylreste mit 6 bis 26 C-Atomen, insbesondere Alkylreste mit 10 bis 18 C-Atomen Kettenlänge, speziell dem Nonyl-, Decycl-, Undecyl-, Dodecyl-, Tridecyl-, Tetradecyl-, Pentadecyl-, Hexadecyl-, Heptadecyl-, Octadecyl-, 2-Butyloctyl-, 2-Pentyloctyl-, 2-Hexyldecyl-, 2-Heptylundecyl-, 2-Octyldodecyl-, 2-Nonyltridecyl-, 2-Decyltetradecyl-, 10-Undecenyl-, Oleyl-, 9+-Octa-decenyl-, Linoleyl- oder Linolenylrest ; aromatische Reste wie der gegebenenfalls substituierte Phenylrest oder der Alkylphenylrest mit bis zu drei primären oder sekundären Alkylresten, vorzugsweise dem Hexylphenyl-, Heptylphenyl-, Octylphenyl-, Nonylphenyl-, Undecylphenyl-, Dodecyl-phenyl, Isononylphenyl-, Tributylphenyl- oder Dinonylphenylrest, oder der Phenylrest mit weiteren aromatischen Resten substituiert wie der Benzyl-p-phenyl-phenylrest ; Naphthyl- oder Alkylnaphthylreste vorzugsweise der α-Naphthyl-, β-Naphthylrest oder der Alkyl-β-naphthylrest mit 1 bis 3 Alkylgruppen der Art Methyl, Butyl, Octyl, Nonyl, Decyl, Dodecyl oder Tetradecyl ; gegebenenfalls alkylsubstituierte heterocyclische Reste oder mit solchen substituierte Alkylreste wie beispielsweise der 2-[2-(8-Heptadecen-1-yl)-4,5-dihydro-1-imidazolyl]-ethyl-Rest.

Bevorzugt sind auch Gemische der obengenannten Verbindungen und insbesondere Gemische wie sie bei der Oxalkylierung mit Ethylenoxid und/oder Propylenoxid von synthetischen Fettalkoholen aus der Oxosynthese oder von Fettalkoholen aus natürlichen Rohstoffen (nach Fettspaltung und Reduktion) gewonnen werden. Als natürliche Rohstoffe seien Kokosöl, Palmöl, Baumwollsaatöl, Sonnenblumenöl, Sojabohnenöl, Leinöl, Rüböl, Talg- und Fischöl genannt. Ebenso geeignet sind entsprechende Fettamin-Oxalkylate aus diesen natürlichen Rohstoffen, insbesondere Kokosfettamin, Talgamin, Oleylamin.

Außerdem sind auch oxalkylierte, höhermolekulare oberflächenaktive Hilfsmittel (Tenside) zu erwähnen, wie sie beispielsweise in den folgenden Patent-, Offen- und Auslegeschriften beschrieben werden, wobei davon diejenigen Tenside ausgenommen sind, die keinen Trübungspunkt in wäßriger Lösung haben :

DE-A-27 30 223, DE-B-21 56 603, DE-A-30 26 127, DE-B-24 21 606 und EP-A-00 17 189.

Welches Tensid eingesetzt wird, ist vom jeweiligen Produkt und vom Einsatzgebiet der erfindungsgemäß anfallenden hochkonzentrierten Preßkuchen oder Pulver abhängig.

Im Vergleich zu den herkömmlichen Verfahren zur Herstellung von wäßrigen Feststoffpreßkuchen ergibt die Anwendung des erfindungsgemäßen Verfahrens eine verbesserte Raumzeitausbeute bei der Filtration von Feststoffen, eine Einsparung von Trockenkosten und einen verringerten Dispergieraufwand bei der Verarbeitung der hochkonzentrierten vorpräparierten Preßkuchen zu wäßrigen Feststoffdispersionen. Besonders eignet sich dieses Verfahren zur Herstellung von Pigment- bzw. Farbstoffteigen, die zum Einfärben von Materialien in wäßrigen Medien dienen.

In den folgenden Beispielen beziehen sich Teile und Prozentangaben auf das Gewicht, wenn nichts anderes angegeben ist. Gewichts- und Volumenanteile stehen im Verhältnis von kg und Liter. Die Trübungspunkte wurden entsprechend DIN 53917 bestimmt.

Beispiel 1

462 Teile 1-Acetoacetylamino-2-methoxybenzol wurden in 8 600 Teilen Wasser durch Zugabe von 435 Teilen 33 %iger Natronlauge gelöst. In die Lösung ließ man danach 126 Teile Eisessig zulaufen. Die entstandene Kupplungskomponente versetzte man innerhalb von 120 Minuten mit einer nach bekannter Weise hergestellten Diazoniumsalzlösung aus 361 Teilen 2-Methoxy-4-nitroanilin. Nach beendeter Kuppelreaktion lag eine Pigmentsuspension von 800 Teilen C.I. Pigment Yellow 74, C.I. Nr. 11741, in einem Kuppelvolumen von 18 000 Teilen vor. Dieser Pigmentsuspension wurden bei 23 °C 52 Teile Kokosfettaminpolyglykolether mit einem Trübungspunkt von 62-64 °C zugesetzt und gut verrührt. Dann wurde unter Rühren auf 98 bis 100 °C erhitzt, 1 Stunde bei dieser Temperatur nachgerührt, abgekühlt auf 80 °C und dann das Pigment (spezifische Oberfläche nach BET 14 $m^2$/g) bei dieser Temperatur über eine Filterpresse isoliert. Anschließend wurde mit 75 bis 80 °C heißem Wasser neutral und salzfrei gewaschen und 10 Minuten mit Luft trocken geblasen. Der anfallende Pigment-Preßkuchen hatte einen Feststoffgehalt von 51 %.

Vergleichsbeispiel :

Es wurde in der gleichen Weise wie oben nur ohne den Zusatz des Tensids verfahren. Man erhielt einen Pigment-Preßkuchen mit einem Feststoffgehalt von 25,8 %.

Beispiel 2

Man verfuhr in der gleichen Weise wie in Beispiel 1, verwendete aber anstelle von 52 Teilen Kokosfettaminpolyglykolether 52 Teile eines Polymerisationsproduktes von Ethylenoxid und Propylenoxid mit einem Trübungspunkt in Wasser von 55 °C. Es wurde ein Pigment-Preßkuchen mit einem Feststoffgehalt von 56,5 % erhalten.

Beispiel 3

Man verfuhr in der gleichen Weise wie in Beispiel 1, verwendete jedoch anstelle von 52 Teilen Kokosfettaminpolyglykolether 52 Teile eines Nonylphenolpolyglykolethers mit einem Trübungspunkt in Wasser von 32-34 °C. Es wurde ein Pigmentpreßkuchen mit einem Feststoffgehalt von 54,5 % erhalten, der ohne weitere Zusätze nach dem Erkalten auf 23 °C mittels eines Dissolvers zu einem fließ- und pumpfähigen Teig verarbeitet werden konnte.

Beispiel 4

100 Gew.-Teile C.I. Pigment Blue 61, C.I. No. 42756 : 1 wurden in 2 300 Gew.-Teilen Wasser mit 20 Gew.-Teilen Natriumhydroxid bei 90-100 °C gelöst. In die heiße Farbstofflösung wurden 8 Gew.-Teile eines Nonylphenolpolyglykolethers mit einem Trübungspunkt in Wasser bei 32-34 °C zugegeben und dann das Pigment mit 160 Teilen 18 %iger Schwefelsäure bei einem pH-Wert unter pH 3 ausgefällt. Das Produkt wurde bei 70 °C über eine Porzellanfilternutsche abgesaugt und mit 70 °C heißem Wasser salzfrei gewaschen. Der anfallende Pigment-Preßkuchen hatte einen Feststoffgehalt von 28 %.

Bei der Weiterverarbeitung konnte der 28 %ige Pigment-Preßkuchen nach Abkühlen auf 23 °C mit Hilfe eines Dissolvers verflüssigt und anschließend durch Sprühtrocknung zu Pulver getrocknet werden.

Vergleichsbeispiel :

Man verfuhr in der oben beschriebenen Weise, jedoch ohne den Zusatz des Tensids, und erhielt einen Feststoffgehalt im Preßkuchen von 18 %.

Beispiel 5

Durch Kupplung wurde eine Farbstoffsuspension von 800 Teilen C.I. Disperse Yellow 227 in einem Kuppelvolumen von 22 000 Teilen hergestellt. Dieser Farbstoffsuspension wurden bei 22 °C 80 Teile Benzyl-p-phenyl-phenol-polyglykoläther mit einem Trübungspunkt in der Mutterlauge von 60-62 °C zugegeben und gut verrührt. Unter Rühren wurde auf 85 °C erhitzt und der Farbstoff bei dieser Temperatur über eine Filterpresse isoliert. Anschließend wurde mit 70-75 °C heißem Wasser neutral und salzfrei gewaschen und 10 Minuten mit Luft trocken geblasen. Der anfallende Farbstoff-Preßkuchen hatte einen Feststoffgehalt von 41,4 %.

Vergleichsbeispiel :

Das gleiche Verfahren wurde ohne den Zusatz des Tensids wiederholt. Man erhielt einen Farbstoff-Preßkuchen mit einem Feststoffgehalt von 23,7 %.

Beispiel 6

Bei der Herstellung von 4-Amino-3-nitro-benzoesäure aus 4-Chlor-3-nitrobenzoesäure und Ammoniak fiel nach der Ausfällung mit Schwefelsäure bei pH 2-3 eine Feststoffsuspension von 42,4 Teilen 4-Amino-3-nitro-benzoesäure (spezifische Oberfläche BET von 14,5 m$^2$/g) in einem Reaktionsvolumen von 647 Teilen an. Dieser Feststoffsuspension wurden bei einer Temperatur von 23 °C 5,3 Teile eines $C_{12}$-$C_{15}$-Fettalkohol-ethylenoxid-propylenoxid-adduktes mit einem Trübungspunkt in Wasser bei 40-42 °C zugesetzt und unter Rühren auf eine Temperatur von 80 °C erhitzt. Dann wurde bei dieser Temperatur der Feststoff über eine beheizte Filternutsche isoliert und mit 60 °C heißem Wasser neutral und salzfrei gewaschen. Der anfallende Preßkuchen von 4-Amino-3-nitro-benzoesäure hatte einen Feststoffgehalt von 41,9 %.

Vergleichsbeispiel :

Es wurde in der gleichen Weise, nur ohne den Zusatz des Tensids, verfahren. Man erhielt einen Preßkuchen mit dem Feststoffgehalt von 18,3 %.

Beispiel 7

Durch Kupplung wurde eine Pigmentsuspension von 1 500 Teilen C.I. Pigment Yellow 83, C.I. No. 21108 (spez. Oberfläche nach BET von 69 m$^2$/g) in einem Kuppelvolumen von 24 875 Teilen hergestellt. Dieser Pigmentsuspension wurden bei 24 °C 187,5 Teile eines Tributylphenol-Polyglykolethers mit einem Trübungspunkt in Wasser von 62-64 °C zugesetzt und gut verrührt. Dann wurde unter Rühren auf 85 °C erhitzt und das Pigment bei dieser Temperatur über eine Filterpresse isoliert. Anschließend wurde mit 70-75 °C heißem Wasser salzfrei gewaschen und 10 Minuten mit Luft trockengeblasen. Der anfallende Pigment-Preßkuchen hatte einen Feststoffgehalt von 41 %.

Vergleichsbeispiel :

Es wurde wie oben beschrieben, aber ohne Zusatz des Tensids, verfahren. Man erhielt einen Pigment-Preßkuchen mit einem Feststoffgehalt von 25,3 %.

Beispiel 8

315 Teile Preßkuchen von C.I. Pigment Yellow 151 (spez. Oberfläche nach BET von 17,5 m$^2$/g) mit einem Trockengehalt von 31,7 % wurden mit soviel Wasser am Dissolver aufgerührt, daß eine 5 %ige homogene Pigmentsuspension vorlag. Dieser Pigmentsuspension wurden bei einer Temperatur von 23 °C 5 Teile eines $C_{12}$-$C_{15}$-Fettalkoholethylenoxid-propylenoxid-Adduktes mit einem Trübungspunkt in Wasser von 40-42 °C zugesetzt und 1/2 h nachgerührt. Anschließend wurde unter Rühren auf 80-85 °C erhitzt und dann das Pigment bei dieser Temperatur über eine beheizte Filternutsche isoliert. Der anfallende Pigment-Preßkuchen hatte einen Feststoffgehalt von 50,9 %.

Beispiel 9

276,2 Teile Preßkuchen von C.I. Pigment Orange 36, C.I. No. 11780 (spez. Oberfläche nach BET von 20 m²/g) mit einem Trockengehalt von 36,2 % wurden mit soviel Wasser am Dissolver aufgerührt, daß eine 5 %ige homogene Pigmentsuspension vorlag. Dieser Pigmentsuspension wurden bei einer Temperatur von 22 °C 5 Teile eines 2-[2-(8-Heptadecen-1-yl)-4,5-dihydro-1-imidazolyl]-ethanol-ethylenoxid-propylenoxid-Adduktes mit einem Trübungspunkt in Wasser von 32-34 °C zugesetzt und 1/2 h nachgerührt. Anschließend wurde unter Rühren auf 80-85 °C erhitzt und dann bei dieser Temperatur über eine beheizte Filternutsche isoliert. Der anfallende Pigment-Preßkuchen hatte einen Feststoffgehalt von 54,5 %.

Beispiel 10

Durch Kupplung wurde eine Pigmentsuspension von 1 500 Teilen C.I. Pigment Red 112, C.I. No. 12370 (spez. Oberfläche nach BET von 37 m²/g) in einem Kuppelvolumen von 40 000 Teilen hergestellt. Dieser Pigmentsuspension wurden bei 22 °C 180 Teile eines $C_{12}$-$C_{15}$-Fettalkohol-ethylenoxid-propylenoxid-Adduktes mit einem Trübungspunkt in Wasser von 28-30 °C zugesetzt und gut verrührt. Dann wurde unter Rühren auf 80 °C erhitzt und bei dieser Temperatur über eine Filterpresse das Pigment isoliert. Anschließend wurde mit 55-60 °C heißem Wasser neutral und salzfrei gewaschen und 10 Minuten mit Luft trockengeblasen. Der anfallende Pigment-Preßkuchen hatte einen Feststoffgehalt von 39,7 %.

Vergleichsbeispiel:
Es wurde in der gleichen Weise wie oben beschrieben verfahren, jedoch ohne den Zusatz des Tensids. Man erhielt einen Pigment-Preßkuchen mit 22,5 % Feststoffgehalt.

Beispiel 11

315,5 Teile Preßkuchen von C.I. Pigment Yellow 151 mit einem Trockengehalt von 31,7 % wurden mit soviel Wasser am Dissolver aufgerührt, bis eine 5 %ige homogene Pigmentsuspension vorlag. Dieser Pigmentsuspension wurden bei einer Temperatur von 15 °C 3 Teile eines $C_{10}$-Fettalkoholethylenoxid-propylenoxid-Adduktes mit einem Trübungspunkt in Wasser von 18-20 °C und 3 Teile eines Naturharzsäure-ethylenoxid-Adduktes mit einem Trübungspunkt in Wasser von 39-41 °C zugesetzt und 1/2 h nachgerührt. Anschließend wurde unter Rühren auf 80 °C erhitzt und dann bei dieser Temperatur über eine beheizte Filternutsche das Pigment isoliert. Der anfallende Pigment-Preßkuchen hatte einen Feststoffgehalt von 51,8 %.

Beispiel 12

315,5 Teile Preßkuchen von C.I. Pigment Yellow 151 (spez. Oberfläche nach BET von 17,5 m²/g) mit einem Trockengehalt von 31,7 % wurden mit soviel Wasser am Dissolver aufgerührt, bis eine 5 %ige homogene Pigmentsuspension vorlag. Dieser Pigmentsuspension wurden bei einer Temperatur von 22 °C 4 Teile eines $C_{12}$-$C_{15}$-Fettalkoholethylenoxid-propylenoxid-Adduktes mit einem Trübungspunkt in Wasser von 40-42 °C und 2 Teilen eines Cocosfettaminpolyglykolethers mit einem Trübungspunkt in Wasser von 62-64 °C zugesetzt und 1/2 h nachgerührt. Anschließend wurde unter Rühren auf 80-85 °C erhitzt und dann bei dieser Temperatur das Pigment über eine beheizte Filternutsche isoliert. Der anfallende Pigment-Preßkuchen hatte einen Feststoffgehalt von 50,1 %.

Beispiel 13

Einer Pigmentsuspension von 100 Teilen C.I. Pigment Violet 19, C.I. No. 46500 (spez. Oberfläche nach BET von 34 m²/g) in 1 900 Teilen Wasser wurden bei 22 °C 8 Teile eines Nonylphenol-polyglykolethers mit einem Trübungspunkt in Wasser von 32-34 °C zugegeben und gut verrührt. Dann wurde unter Rühren auf 80 °C erhitzt und das Pigment bei dieser Temperatur über eine beheizte Filternutsche isoliert. Der anfallende Preßkuchen hatte einen Feststoffgehalt von 42,5 %.

Vergleichsbeispiel:
Der Versuch wurde wie oben beschrieben, jedoch ohne Zusatz des Tensids wiederholt. Man erhielt einen Pigment-Preßkuchen mit 26,4 % Feststoffgehalt.

**Patentansprüche**

1. Verfahren zur Herstellung eines hochkonzentrierten wäßrigen Preßkuchens eines in Wasser unlöslichen bis schwerlöslichen organischen Feststoffes aus der Gruppe der Farbstoffe, Pigmente oder Pflanzenschutzmittel, dadurch gekennzeichnet, daß man eine wäßrige Suspension des Feststoffes mit einem Gehalt an 0,5 bis 15 mg pro Quadratmeter Feststoffoberfläche eines oder mehrerer nichtionischer Tenside aus der Gruppe der Oxalkylate von aliphatischen, cycloaliphatischen, aromatischen oder heterocyclischen Hydroxy- und Aminoverbindungen sowie der Blockpolymerisate von Ethylenoxid und Propylenoxid, wobei die Tenside in wäßriger Lösung einen Trübungspunkt haben, herstellt und den Feststoff bei einer Temperatur oberhalb des Trübungspunktes des bzw. der eingesetzten Tenside isoliert.

2. Verfahren nach Anspruch 1, dadurch gekennzeichnet, daß man anfangs eine Suspension des Feststoffs mit dem Tensid oder Tensidgemisch bei einer Temperatur unterhalb des Trübungspunktes vermischt.

3. Verfahren nach Anspruch 1 oder 2, dadurch gekennzeichnet, daß man anfangs die tensidhaltige Suspension des Feststoffes aus seiner wäßrigen Lösung in Gegenwart des Tensids oder des Tensidgemisches herstellt.

4. Verfahren nach einem oder mehreren der Ansprüche 1 bis 3, dadurch gekennzeichnet, daß der Feststoff ein Azofarbstoff oder ein Azopigment ist und das Tensid der Kuppelsuspension nach der Azokupplung zugegeben wird.

5. Verfahren nach einem oder mehreren der Ansprüche 1 bis 4, dadurch gekennzeichnet, daß das nichtionogene Tensid oder Tensidgemisch einen Trübungspunkt in Wasser zwischen 5 und 90 °C hat.

6. Verfahren nach einem oder mehreren der Ansprüche 1 bis 4, dadurch gekennzeichnet, daß das nichtionogene Tensid oder Tensidgemisch einen Trübungspunkt in Wasser zwischen 20 und 70 °C hat.

7. Verfahren nach einem oder mehreren der Ansprüche 1 bis 6, dadurch gekennzeichnet, daß man pro Quadratmeter Feststoffoberfläche 1 bis 6 mg Tensid einsetzt.

8. Verfahren nach einem oder mehreren der Ansprüche 1 bis 7, dadurch gekennzeichnet, daß der oberhalb des Trübungspunktes erhaltene Preßkuchen unterhalb des Trübungspunktes durch Einwirkung von Scherkräften verflüssigt wird.

## Claims

1. A process for preparing a highly concentrated aqueous press cake of a water-insoluble or sparingly water-soluble organic solid from the group dyes, pigments and crop protection agents, which comprises preparing an aqueous suspension of the solid containing, per square meter of surface area of the solid, 0.5 to 15 mg of one or more nonionic surfactants from the group consisting of alkoxylates of aliphatic, cycloaliphatic, aromatic or heterocyclic hydroxy and amino compounds and the block polymers of ethylene oxide and propylene oxide, the surfactants having a cloud point in aqueous solution, and isolating the solid at a temperature above the cloud point of the surfactant(s) used.

2. The process as claimed in claim 1, wherein initially a suspension of the solid is mixed with the surfactant or surfactant mixture at a temperature below the cloud point.

3. The process as claimed in claim 1 or 2, wherein initially the surfactant-containing suspension of the solid is prepared from its aqueous solution in the presence of the surfactant or surfactant mixture.

4. The process as claimed in one or more of claims 1 to 3, wherein the solid is an azo dye or pigment and the surfactant is added to the coupling suspension after the azo coupling.

5. The process as claimed in one or more of claims 1 to 4, wherein the nonionic surfactant or surfactant mixture has a cloud point in water between 5 and 90 °C.

6. The process as claimed in one or more of claims 1 to 4, wherein the nonionic surfactant or surfactant mixture has a cloud point in water between 20 and 70 °C.

7. The process as claimed in one or more of claims 1 to 6, wherein 1 to 6 mg of surfactant is used per square meter of surface area of the solid.

8. The process as claimed in one or more of claims 1 to 7, wherein the press cake obtained above the cloud point is liquefied below the cloud point through the action of shearing forces.

## Revendications

1. Procédé pour préparer un gâteau aqueux hautement concentré de filtration avec pressage d'un solide organique insoluble à peu soluble dans l'eau, du groupe des colorants, des pigments ou des produits phytosanitaires pour la protection des plantes, procédé caractérisé en ce qu'on ajoute, à une suspension aqueuse du solide ayant une teneur de 0,5 à 15 mg par mètre carré de surface spécifique de solides, un ou plusieurs tensio-actifs non-ioniques du groupe des produits d'oxyalkylation de composés hydroxylés et d'amines aliphatiques, cycloaliphatiques, aromatiques ou hétérocycliques, ainsi que des polymères à blocs ou longues séquences de l'oxyde d'éthylène et de l'oxyde de propylène, les tensio-actifs ayant en solution aqueuse un point de trouble, et l'on isole le solide à une température supérieure au point de trouble du ou des tensio-actifs ainsi utilisés.

2. Procédé selon la revendication 1, caractérisé en ce qu'on mélange au début une suspension du solide avec le tensio-actif, ou avec le mélange des tensio-actifs, à une température inférieure au point de trouble.

3. Procédé selon la revendication 1 ou 2, caractérisé en ce qu'on prépare au début la suspension du solide, contenant le tensio-actif, à partir de la solution aqueuse de ce solide en présence du tensio-actif ou du mélange des tensio-actifs.

4. Procédé selon une ou plusieurs des revendications 1 à 3, caractérisé en ce que le solide est un colorant azoïque ou un pigment azoïque et on ajoute le tensio-actif à la suspension du produit de copulation, après la copulation de formation du composé azoïque.

5. Procédé selon une ou plusieurs des revendications 1 à 4, caractérisé en ce que le tensio-actif non-ionogène ou le mélange non-ionogène des tensio-actifs présente dans l'eau un point de trouble compris entre 5 et 90 °C.

6. Procédé selon une ou plusieurs des revendications 1 à 4, caractérisé en ce que le tensio-actif non-ionogène, ou le mélange des tensio-actifs non-ionogènes, présente dans l'eau un point de trouble compris entre 20 et 70.°C.

7. Procédé selon une ou plusieurs des revendications 1 à 6, caractérisé en ce qu'on utilise par mètre carré de surface de solides 1 à 6 mg du tensio-actif.

8. Procédé selon une ou plusieurs des revendications 1 à 7, caractérisé en ce qu'on fluidifie au-dessous du point de trouble, en faisant agir des forces de cisaillement, le gâteau de filtration obtenu par pressage à une température supérieure au point de trouble.